# EUROPÄISCHE PATENTANMELDUNG

(11) **EP 2 597 698 A1**
(43) Veröffentlichungstag der Anmeldung: **29.05.2013**
(21) Anmeldenummer: 12192692.7
(22) Anmeldetag: 15.11.2012
(51) Int. Cl.: H01M 2/02, H01M 2/10, H01M 10/50

(54) **Rahmen und System zum Halten und Temperieren einer Batteriezelle**

(30) Priorität: 24.11.2011 DE 202011052087 U
(71) Anmelder: REHAU AG + Co, 95111 Rehau (DE)
(72) Erfinder: Löffler, Andreas, 95111 Rehau (DE); Grosch, Michael, 07919 Mühltroff (DE); Müller, Claus, 95028 Hof (DE); Welzer, Jürgen, 95111 Rehau (DE); Steeg, Claus-Christian, 08606 Oelsnitz (DE); Spies, Ina, 95111 Rehau (DE)

(57) **Zusammenfassung**

Die Erfindung betrifft einen Rahmen (12) zum Halten und Temperieren einer Batteriezelle (14), wobei der Rahmen (12) eingerichtet ist, den Umfang (18) einer Batteriezelle (14) wenigstens teilweise einzufassen, wobei der Rahmen (12) wenigstens einen Fluidkanal (22) für die Durchströmung mit einem Temperierungsfluid zum Temperieren der Batteriezelle (14) aufweist, wobei der Fluidkanal (22) wenigstens abschnittsweise innerhalb des Rahmens (12) angeordnet und parallel zur Rahmenebene (C) ausgerichtet ist. Die Erfindung betrifft ferner ein System (32) umfassend wenigstens zwei miteinander verbundene Rahmen (12). Die Erfindung betrifft auch eine Anordnung (10) mit wenigstens einer Batteriezelle (14) und wenigstens einem Rahmen (12) oder wenigstens einem System (32).

## Beschreibung

### Hintergrund der Erfindung

Die vorliegende Erfindung betrifft einen Rahmen und ein System zum Halten und Temperieren einer Batteriezelle.

Es ist bekannt Batteriezellen in Form sogenannter Coffeebag-Zellen auszubilden. Coffeebag-Zellen sind flach und rechteckig ausgebildete Batteriezellen, wobei der elektrochemische Bereich von einer folienartigen Verpackung umgeben ist. Coffeebag-Zellen werden insbesondere in Transaktionsbatterien für Elektrofahrzeuge verwendet, wobei in einer Transaktionsbatterie typischerweise acht Coffeebag-Zellen eins von mehreren Modulen der Transaktionsbatterie bilden. Jede Coffeebag-Zelle kann hierbei typischerweise eine Spannung von 5 Volt bereitstellen, um ein Modul mit einer bereitstellbaren Spannung von 40 Volt auszubilden.

Bekannte Vorrichtungen zum Halten und Temperieren einer Coffeebag-Zelle sind für die Temperierung der Coffeebag-Zellen, insbesondere für die Wärmeabfuhr der beim Betrieb der Coffeebag-Zelle entstehenden Wärme mit Kühlkörpern versehen. So ist z.B. aus der DE 10 2009 016 866 A1 bekannt, mit Kühlrippen versehene Kühlkörper, an denen eine Coffeebag-Zelle befestigt bzw. gehalten ist, für die Abführung der Wärme vorzusehen, die beim Betrieb der Coffeebag-Zelle im elektrochemischen Bereich der Coffeebag-Zellen entsteht.

### Zugrundeliegende Aufgabe

Gegenüber bekannten Vorrichtungen zum Halten und Temperieren von Batteriezellen ist es Aufgabe der Erfindung, eine alternative Vorrichtung zum Halten und Temperieren einer Batteriezelle und ein alternatives System zum Halten und Temperieren von wenigstens einer Batteriezelle anzugeben.

### Erfindungsgemäße Lösung

Diese Aufgabe wird erfindungsgemäß mit einem Rahmen zum Halten und Temperieren einer Batteriezelle mit den Merkmalen des Anspruchs 1 und mit einem System zum Halten und Temperieren mit den Merkmalen des Anspruchs 9 gelöst.

Der erfindungsgemäße Rahmen ist eingerichtet, den Umfang einer Batteriezelle wenigstens teilweise einzufassen. Insbesondere kann der erfindungsgemäße Rahmen eingerichtet sein, den Umfang einer Batteriezelle vollständig bzw. im Wesentlichen vollständig einzufassen. Insbesondere kann der Rahmen auch in Form eines geschlossenen Rahmens ausgebildet sein. Bei der Batteriezelle kann es sich insbesondere um eine Batteriezelle in Form einer sogenannten Coffebag-Zelle handeln. Coffeebag-Zellen sind flach und rechteckig ausgebildete Batteriezellen, wobei der elektrochemische Bereich der Batteriezelle von einer folienartigen Verpackung umgeben ist. Der erfindungsgemäße Rahmen kann, sofern er zum Halten und Temperieren einer Coffebag-Zelle vorgesehen ist, eingerichtet sein, den Umfang der Coffeebag-Zelle bzw. den Umfang der folienartigen Verpackung wenigstens teilweise oder vollständig einzufassen. Der Umfang kann hierbei z.B. in einer an dem Rahmen ausgebildeten bzw. an dem Rahmen vorgesehenen Nut oder in einem an dem Rahmen ausgebildetem bzw. an dem Rahmen vorgesehenem Schlitz aufgenommen sein. Die vorgesehene Einfassung ermöglicht einen stabilen Halt bzw. eine stabile Befestigung der Batteriezelle an dem Rahmen. Die Batteriezelle bzw. der Umfang der Batteriezelle kann auch z.B. formschlüssig mit dem Rahmen verbunden sein oder der Umfang bzw. ein sich bis zu dem Umfang erstreckender Randbereich der Batteriezelle kann z.B. in eine an dem Rahmen vorgesehene Nut eingegossen sein. Die vorgesehene Einfassung ermöglicht insbesondere eine Halterung der Batteriezelle, die vorteilhaft nur wenig Bauraum in Anspruch nimmt. Dies ist insbesondere im Hinblick auf die Bildung einer Transaktionsbatterie für ein Elektrofahrzeug mit hoher Energiedichte von Vorteil, die aus einer Mehrzahl von Batteriezellen, insbesondere in Form von Coffeebag-Zellen, besteht. Durch Vorsehen des erfindungsgemäßen Rahmens können die Batteriezellen sehr eng gepackt werden.

Der erfindungsgemäße Rahmen weist wenigstens einen Fluidkanal für die Durchströmung mit einem Temperierungsfluid zum Temperieren der Batteriezelle auf. Durch Vorsehen des Fluidkanals ist es möglich, die bei Betrieb der Batteriezelle entstehende und auf den Rahmen übertragene Wärmeenergie abzuführen. Die Wärmeabführung kann hierbei durch das Temperierungsfluid erfolgen, welches insbesondere eine Flüssigkeit sein kann, wie z.B. demineralisiertes Wasser oder Öl, oder ein Alkohol, oder eine Perfluorkohlenstoff-Verbindung.

Für Öle haben sich insbesondere synthetische Öle (z.B. Silikonöle) oder mineralische Öle oder Paraffinöle als besonders geeignet erwiesen. Bekannte Perfluorkohlenstoff-Verbindung sind unter dem Handelsnamen Fluorinert™ von der Firma 3M™ erhältlich. Das Temperierungsfluid kann auch ein zur Erwärmung der Batteriezelle vorgesehenes Temperierungsfluid sein, wobei für die Erwärmung der Batteriezelle Wärmeenergie des Temperierungsfluids über den erfindungsgemäßen Rahmen auf die Batteriezelle übertragen werden kann. Ein Erwärmen kann z.B. in einer Transaktionsbatterie eines Elektrofahrzeugs erforderlich sein, um die Batteriezellen der Transaktionsbatterie z.B. im Winter auf einer vorgegebenen Mindesttemperatur zu halten.

Da der Fluidkanal wenigstens abschnittsweise innerhalb des Rahmens angeordnet und parallel zur Rahmenebene ausgerichtet ist" kann durch Durchströmen des Fluidkanals mit dem Temperierungsfluid ein Temperaturgefälle ausgebildet werden, welches eine wirksame und zellennahe Abkühlung oder Erwärmung der Batteriezelle ermöglicht deren Umfang in dem Rahmen eingefasst bzw. einfassbar ist. Vorzugsweise erstreckt sich der Fluidkanal über mehrere winkelig miteinander verbundene Rahmenabschnitte. Ein auf diese Weise ausgebildeter Fluidkanal kann vorteilhaft wenigstens teilweise oder vollständig an den Verlauf des Umfangs der Batteriezelle angepasst sein bzw. der Erstreckung des Umfangs wenigstens teilweise oder vollständig folgend ausgebildet sein, wenn die Batteriezelle in dem Rahmen eingefasst ist, einhergehend mit einer sehr wirksamen und zellennahen Abkühlung oder Erwärmung der Batteriezelle. Insbesondere kann der Fluidkanal derart ausgebildet sein, dass der Fluidkanal der Erstreckung des Umfangs im Wesentlichen folgend ausgebildet ist bzw. sich im Wesentlichen parallel zur Umfangsrichtung der Batteriezelle erstreckt, wenn die Batteriezelle in dem Rahmen eingefasst ist.

Der Fluidkanal ist wenigstens abschnittsweise innerhalb des Rahmens angeordnet. Insbesondere kann der Fluidkanal in Form eines zusammenhängenden Hohlraums ausgebildet sein. Ferner kann der Fluidkanal bevorzugt vollständig innerhalb des Rahmens angeordnet bzw. ausgebildet sein. Ein erfindungsgemäßer Rahmen mit einem vollständig innerhalb des Rahmens angeordnetem bzw. ausgebildetem Fluidkanal, der insbesondere in Form eines zusammenhängenden Hohlraums ausgebildet sein kann, kann auf praktische Weise und in großer Stückzahl aus einem Kunststoffmaterial durch Spritzgießen hergestellt werden. Der Hohlraum kann hierbei vorzugsweise durch Anwenden einer Gasinjektionstechnik oder einer Wasserinjektionstechnik oder durch ein anderes hohlkammerformendes Verfahren ausgebildet werden. Der Fluidkanal ermöglicht eine einfache Führung des Temperierungsfluids, so dass hierfür keine weiteren bzw. zusätzlichen Bauteile erforderlich sind.

Bei einer praktischen Ausführungsform ist der Rahmen mit wenigstens einem plattenförmigen Element versehen, das sich zwischen wenigstens zwei gegenüberliegenden Seiten des Rahmens erstreckt. Über das plattenförmige Element kann die Wärmeabfuhr von der Batteriezelle oder die Wärmezufuhr zu der Batteriezelle deutlich gesteigert werden, derart, dass Wärmeenergie insbesondere von der Batteriezelle über das plattenförmige Element auf das den Rahmen durchströmende bzw. in dem Rahmen aufgenommene Temperierungsfluid übertragbar ist oder dass die Wärmeenergie insbesondere von dem Temperierungsfluid über das plattenförmige Element auf die Batteriezelle übertragbar ist. Ferner wirkt das plattenförmige Element als zusätzlicher Kühlkörper auf den während des Betriebs der Batteriezelle die im elektrochemischen Bereich der Batteriezelle entstehende Wärmeenergie übertragbar ist.

Insbesondere von Bereichen in Umgebung des Zentrums der Batteriezelle kann durch Vorsehen des plattenförmigen Elements Wärmeenergie wirksam abgeführt werden bzw. es kann durch Vorsehen des plattenförmigen Elements Bereichen in Umgebung des Zentrums der Batteriezelle Wärmeenergie wirksam zugeführt werden. Besonders bevorzugt ist bei dieser praktischen Ausführungsform das plattenförmige Element derart relativ zu dem Rahmen bzw. in Bezug auf den Rahmen angeordnet, dass die Batteriezelle, wenn deren Umfang im Rahmen wenigstens teilweise eingefasst ist, wenigstens bereichsweise flächig auf dem plattenförmigen Element aufliegt. Über den ausgebildeten flächigen Auflagebereich ist eine sehr wirksame Wärmeübertragung möglich.

Das plattenförmige Element kann vorzugsweise eine schwarze Materialfarbe aufweisen bzw. schwarz sein, einhergehend mit Wesentlichen Steigerung des Wärmeaufnahmevermögens und damit insbesondere auch der Kühlwirkung des plattenförmigen Elements. Auch der Rahmen kann vorzugsweise eine schwarze Materialfarbe aufweisen bzw. schwarz sein.

Das plattenförmige Element ist vorzugsweise an dem Rahmen angeformt bzw. einstückig mit Rahmen ausgebildet. Eine mit dem Rahmen einstückige Ausbildung ist auf praktische Weise und in großer Stückzahl aus einem Kunststoffmaterial durch Spritzgießen herstellbar.

Besonders bevorzugt kann das plattenförmige Element das plattenförmige Element durchsetzende Aussparungen aufweisen. Durch Vorsehen von Aussparungen, die das plattenförmige Element durchsetzen, kann das Gewicht des plattenförmigen Elements deutlich reduziert werden.

Bei einer bevorzugten Ausführungsform weist das plattenförmige Element ein ringförmiges Element und eine Vielzahl von länglichen Elementen auf, die sich in radialer Richtung von dem ringförmigen Element wegerstrecken, wobei der Bereich zwischen jeweils zwei benachbarten länglichen Elementen wenigstens eine Aussparung aufweist. Ein gemäß dieser bevorzugten Ausführungsform ausgebildetes plattenförmiges Element weist infolge der vorgesehenen Aussparungen ein geringes Gewicht auf und ermöglicht zugleich eine wirksame Wärmeabfuhr von der Batteriezelle bzw. Wärmezufuhr zu der Batteriezelle über das ringförmige Element und die Vielzahl von länglichen Elementen, die sich in radialer Richtung von dem ringförmigen Element wegerstrecken. Besonders bevorzugt ist das ringförmige Element einem zentralen Bereich der Batteriezelle gegenüberliegend bzw. zugewandt angeordnet, wenn der Umfang der Batteriezelle in dem Rahmen wenigstens teilweise eingefasst ist. Dies hat den Vorteil, dass an dem zentralen Bereich der Batteriezelle, also dort wo beim Betrieb der Batteriezelle in der Regel die größte Wärmeentwicklung vorhanden ist, eine wirksame Wärmabfuhr über das ringförmige Element und die Vielzahl von länglichen Elementen möglich ist. Insbesondere eine Vielzahl bzw. Mehrzahl von 10 bis 20 Elementen gewährleistet hierbei eine wirksame Wärmeübertragung bei hoher Stabilität und vergleichsweise geringem Gewicht des plattenförmigen Elements.

Das plattenförmige Element besteht vorzugsweise wenigstens teilweise aus Metall und/oder wenigstens teilweise aus einem Kunststoffmaterial, wobei das plattenförmige Element insbesondere zur Gänze aus Metall oder Kunststoffmaterial bestehen kann. Das Kunststoffmaterial kann besonders bevorzugt ein wärmeleitendes Kunststoffmaterial sein, wie z.B. Kunststoffmaterial mit Füllstoffen wie Kieselsäure, Sillitin, Kaolin, Ruß, Grafit, Kreide, Talkum, Metallpartikeln (z.B. Pulver oder Flakes) aus z.B. Kupfer, Silber oder Aluminium, Bornitrid, Aluminiumnitrid, Aluminiumoxid oder Magnetit. Durch Vorsehen dieser wärmeleitenden Materialien wird eine wirksame Wärmeübertragung über das plattenförmige Element ermöglicht. Besonders bevorzugt weist das Metall eine spezifische Wärmeleitfähigkeit auf, die innerhalb eines Bereichs von 100 W/m·K bis 430 W/m·K und das wärmeleitende Kunststoffmaterial weist eine spezifische Wärmeleitfähigkeit auf, die innerhalb eines Bereichs von 0,1 W/m·K bis 10 W/m·K liegt. Das plattenförmige Element kann insbesondere auch in Form einer Metallfolie, wie z.B. einer Aluminiumfolie ausgebildet sein.

Besonders bevorzugt weist das plattenförmige Element Kohlenstoffpartikel und/oder Metallpartikel auf. Durch Vorsehen von Kohlenstoffpartikeln und/oder Metallpartikeln kann die Wärmeleitfähigkeit des plattenförmigen Elements wesentlich erhöht bzw. gesteigert werden, einhergehend mit einer wesentlichen Steigerung bzw. Verbesserung der Wärmeübertragungseigenschaften des plattenförmigen Elements. Die Kohlenstoffpartikel und/oder die Metallpartikel können insbesondere Nanopartikel oder Nanotubes sein.

Das plattenförmige Element kann vorteilhaft durch ein Verstärkungselement verstärkt sein, wobei das Verstärkungselement vorzugsweise wenigstens teilweise aus Metall und/oder wenigstens teilweise aus Carbonfasermaterial besteht. Ein derart ausgebildetes plattenförmiges Element kann ein geringes Gewicht und eine hohe Festigkeit aufweisen. Insbesondere kann das plattenförmige Element aus einem Kunststoffmaterial und dem Verstärkungselement bestehen, wobei das Verstärkungselement wenigstens teilweise in das Kunststoffmaterial eingebettet ist, einhergehend mit der Schaffung eines plattenförmigen Elements mit sehr geringem Gewicht und sehr hoher Festigkeit.

Bei einer praktischen Ausführungsform ist der Rahmen einstückig ausgebildet. Ein einstückig ausgebildeter Rahmen ist auf praktische Weise und in großer Stückzahl aus einem Kunststoffmaterial durch Spritzgießen herstellbar.

Bevorzugt besteht der Rahmen wenigstens teilweise aus Metall und/oder wenigstens teilweise aus Kunststoffmaterial, wobei der Rahmen insbesondere zur Gänze aus Metall oder Kunststoffmaterial bestehen kann. Das Kunststoffmaterial kann besonders bevorzugt ein wärmeleitendes Kunststoffmaterial sein. Durch Vorsehen dieser wärmeleitenden Materialien wird eine wirksame Wärmeübertragung über den Rahmen ermöglicht. Insbesondere kann der Rahmen auch aus einem metallischen Folienmaterial bzw. metallischem Bleichmaterial bestehen bzw. geformt sein, wie z.B. einem Aluminiumfolienmaterial.

Besonders bevorzugt weist der Rahmen Kohlenstoffpartikel und/oder Metallpartikel auf. Durch Vorsehen von Kohlenstoffpartikeln und/oder Metallpartikeln kann die Wärmeleitfähigkeit des Rahmens wesentlich erhöht bzw. gesteigert werden, einhergehend mit einer wesentlichen Steigerung bzw. Verbesserung der Wärme-Übertragungseigenschaften des Rahmens. Die Kohlenstoffpartikel und/oder die Metallpartikel können insbesondere Nanopartikel oder Nanotubes sein.

Das erfindungsgemäße System umfasst wenigstens zwei miteinander verbundene erfindungsgemäße Rahmen. Das System kann eine beliebige Mehrzahl von miteinander verbundenen Rahmen umfassen, also z.B. eine Mehrzahl von zwei bis zwanzig Rahmen oder eine Mehrzahl von fünf bis zehn Rahm. Die Anzahl bzw. Mehrzahl der vorgesehenen Rahmen kann beliebig an vorgegebene Anwendungsfälle angepasst werden. So könnten z.B. zur Ausbildung eines Moduls für eine Transaktionsbatterie eines Elektrofahrzeugs acht Rahmen vorgesehen sein. Hierbei wären acht Batteriezellen insbesondere in Form von Coffeebag-Zellen in den acht Rahmen einzufassen, also pro Rahmen eine Coffeebag-Zelle. Jede Coffeebag-Zelle kann hierbei typischerweise eine Spannung von 5 Volt bereitstellen, um ein Modul mit einer bereitstellbaren Spannung von 40 Volt auszubilden. Die Aufteilung der von der Transaktionsbatterie bereitstellbaren Versorgungsspannung auf mehrere Module mit einer bereitstellbaren Versorgungsspannung von maximal 40 Volt hat den Vorteil, dass auch die Nutzer eines Elektrofahrzeugs die Module austauschen dürfen ohne hierfür infolge sicherheitstechnischer Bestimmungen eine ausgebildete Fachkraft, wie z.B. einen Elektriker beauftragen zu müssen oder zu sein. Die bei jedem Rahmen des Systems vorgesehene Einfassung ermöglicht eine Halterung der Batteriezelle, die vorteilhaft nur wenig Bauraum in Anspruch nimmt. Dies ist insbesondere im Hinblick auf die Bildung einer Transaktionsbatterie für ein Elektrofahrzeug mit hoher Energiedichte von Vorteil, die aus einer Mehrzahl von Batteriezellen, insbesondere in Form von Coffeebag-Zellen, besteht. Durch Vorsehen des erfindungsgemäßen Systems können die Batteriezellen sehr eng gepackt werden.

Bei einer praktischen Ausführungsform des erfindungsgemäßen Systems können die Rahmen derart miteinander verbunden sind, dass die Rahmen reihenförmig und parallel zueinander angeordnet sind. Eine Verbindung bei der die Rahmen reihenförmig und parallel zueinander angeordnet sind, ist insbesondere für die Bildung einer Transaktionsbatterie eines Elektrofahrzeugs von Vorteil, die eine Mehrzahl von Batteriezellen in Form von Coffeebag-Zellen aufweist. Eine reihenförmige und parallele Anordnung der Rahmen ermöglicht die Ausbildung einer kompakten Transaktionsbatterie mit hoher Energiedichte.

Bei einer weiteren praktischen Ausführungsform des erfindungsgemäßen Systems weist wenigstens ein Rahmen eine Klemmschiene auf, wobei auf die Klemmschiene ein benachbarter Rahmen aufgesetzt ist und der Rahmen mit der Klemmschiene und der benachbarte Rahmen entlang der Klemmschiene gegeneinander verschiebbar sind. Insbesondere können alle Rahmen des Systems eine derartige Klemmschiene aufweisen.

Über die Klemmschienen können mehrere Rahmen auf praktische und einfache Weise durch Aufsetzen jeweils eines Rahmens auf jeweils eine Klemmschiene eines anderen Rahmens reihenförmig zur Bildung des Systems miteinander verbunden werden.

Vorzugsweise ist an der Klemmschiene oder dem benachbarten Rahmen ein Kunststoffmaterial angeformt, das zwischen der Klemmschiene und dem benachbarten Rahmen angeordnet ist und einen flächigen Kontakt zu dem benachbarten Rahmen oder der Klemmschiene aufweist, wobei das angeformte Kunststoffmaterial weicher ausgebildet ist als das Material jedes Rahmens.

Durch Vorsehen des gegenüber dem Rahmenmaterial weicher ausgebildeten angeformten Kunststoffmaterials mit flächigen Kontakt zu dem benachbarten Rahmen oder der Klemmschiene wird eine hohe Wärmeleitfähigkeit zwischen benachbarten Rahmen bereitgestellt, so dass die von den in den einzelnen Rahmen gehaltenen Batteriezellen erzeugte Wärmeenergie wirksam zwischen den einzelnen Rahmen übertragen und in Summe abgeführt werden kann. Das Vorsehen des angeformten Kunststoffmaterials mit flächigem Kontakt zu dem benachbarten Rahmen oder der Klemmschiene macht aber auch eine sehr gleichmäßige Erwärmung aller Batteriezellen möglich. Das angeformte Kunststoffmaterial kann zur weiteren Verbesserung bzw. Optimierung der Wärmeübertragung vorzugsweise eine Wärmeleitfähigkeit bzw. eine spezifische Wärmeleitfähigkeit aufweisen, die größer ist als die Wärmeleitfähigkeit bzw. die spezifische Wärmeleitfähigkeit des Materials des Rahmens. Das angeformte Kunststoffmaterial kann insbesondere mittels eines Mehr-Komponenten-Spritzgießverfahrens angeformt sein.

Bei einer bevorzugten Ausführungsform des erfindungsgemäßen Systems weist jeder Rahmen wenigstens einen Einlass zum Einströmen des Temperierungsfluids in den Fluidkanal und wenigstens einen Auslass zum Ausströmen des Temperierungsfluids aus dem Fluidkanal auf, wobei die Einlässe und/oder die Auslässe von jeweils zwei Rahmen durch ein fluidleitendes Element fluidleitend miteinander verbunden sind. Das fluidleitende Element ist vorzugsweise in Form eines Verbindungsstücks ausgebildet, das zwei benachbarte Rahmen, die insbesondere also auch voneinander beabstandet sein können, lösbar miteinander verbindet. Insbesondere kann das Verbindungsstück auch als Abstandshalter zur Beabstandung benachbarter Rahmen vorgesehen sein.

Durch Vorsehen der fluidleitenden Elemente kann eine beliebige Anzahl von Rahmen zu einem System miteinander verbunden werden bei welchem die Fluidkanäle aller Rahmen derart fluidleitend miteinander verbunden sind, dass das System für die Durchströmung aller Fluidkanäle mit dem Temperierungsfluid an eine gemeinsame Temperierungsfluid-Quelle anschließbar ist. Ferner ist durch Vorsehen der fluidleitenden Elemente auch der Anschluss an eine gemeinsame Abführleitung zum Abführen des Temperierungsfluids möglich. Insbesondere können durch Vorsehen der fluidleitenden Elemente die Rahmen bzw. Fluidkanäle des Systems in einer beliebigen hydraulischen Verschaltung miteinander verbunden werden. Insbesondere ist eine serielle und/oder parallele hydraulische Verschaltung möglich. Ferner kann eine Batteriezelle einfach gewechselt bzw. durch eine andere ausgetauscht werden in dem die Batteriezelle aus dem jeweiligen Rahmen herausgenommen und der Rahmen mit einer Austausch-Batteriezelle bestückt wird. Der Rahmen selbst kann auf einfache und praktische Weise durch Lösen der entsprechenden fluidleitenden Elemente aus dem bestehenden System herausgelöst werden.

Die Erfindung betrifft auch eine Anordnung mit wenigstens einer Batteriezelle und wenigstens einem erfindungsgemäßen Rahmen oder wenigstens einem erfindungsgemäßen System, wobei der Umfang der Batteriezelle in dem Rahmen wenigstens teilweise eingefasst ist bzw. zur Gänze eingefasst ist.

Bei der Anordnung ist der Umfang der wenigstens einen Batteriezelle in dem wenigstens einem Rahmen wenigstens teilweise eingefasst oder der Umfang der wenigstens einen Batteriezelle ist in dem wenigstens einem Rahmen des wenigstens einen Systems wenigstens teilweise eingefasst.

Bei einer praktischen Ausführungsform der Anordnung ist wenigstens ein Rahmen mit dem plattenförmigen Element vorgesehen, das sich zwischen wenigstens zwei gegenüberliegenden Seiten des Rahmens erstreckt, wobei zwischen dem plattenförmigen Element des Rahmens und der Batteriezelle ein ergänzendes Wärmeleitmedium, insbesondere eine Wärmeleitpaste vorgesehen ist. Durch Vorsehen des ergänzenden Wärmeleitmediums kann die Wärmeübertragung zwischen dem plattenförmigen Element und der Batteriezelle deutlich gesteigert werden. Durch Vorsehen des Wärmeleitmediums, insbesondere einer Wärmeleitpaste können Toleranzen der Bauteile, also insbesondere Toleranzen des Rahmens und der Batteriezelle ausgeglichen werden. Auch Schwankungen bzw. Veränderungen der Abmessungen des Rahmen bzw. der Batteriezelle infolge von Temperaturschwankungen können durch Vorsehen des Wärmeleitmediums ausgeglichen werden bzw. kompensiert werden.

Das Wärmeleitmedium erlaubt der Batteriezelle gewisse Abmessungs-Schwankungen, insbesondere infolge von Temperaturschwankungen, und ermöglicht somit der Batteriezelle zu "atmen".

Bei einer weiteren praktischen Ausführungsform der Anordnung liegt die Batteriezelle wenigstens bereichsweise flächig auf dem plattenförmigen Element auf. Über den ausgebildeten flächigen Auflagebereich ist eine sehr wirksame Wärmeübertragung möglich.

Bei einer bevorzugten Ausführungsform der Anordnung ist wenigstens ein System vorgesehen bei dem wenigstens ein Rahmen eine Klemmschiene aufweist, wobei auf die Klemmschiene ein benachbarter Rahmen aufgesetzt ist und der Rahmen mit der Klemmschiene und der benachbarte Rahmen entlang der Klemmschiene gegeneinander verschiebbar sind, und wobei die Batteriezelle zwischen der Klemmschiene und dem benachbarten Rahmen klemmend gehalten ist. Gemäß dieser bevorzugten Ausführungsform kann durch Aufsetzen eines jeweils benachbarten Rahmens auf die Klemmschiene die wenigstens teilweise eingefasste Batteriezelle auf praktische und einfache Weise an dem System gehalten werden.

Bevorzugt ist bei dieser Ausführungsform an der Klemmschiene oder dem benachbarten Rahmen ein Kunststoffmaterial angeformt, das einen flächigen Kontakt zu der Batteriezelle aufweist, wobei das angeformte Kunststoffmaterial weicher ausgebildet ist als das Material jedes Rahmens. Durch Vorsehen des gegenüber dem Rahmenmaterial weicher ausgebildeten angeformten Kunststoffmaterials mit flächigem Kontakt zu der Batteriezelle wird eine hohe Wärmeleitfähigkeit bzw. Wärmeübertragung zwischen der Batteriezelle und den Rahmen bereitgestellt, so dass die von den in den einzelnen Rahmen gehaltenen Batteriezellen erzeugte Wärmeenergie wirksam auf die Rahmen übertragen und in Summe abgeführt werden kann. Das Vorsehen des angeformten Kunststoffmaterials macht aber auch eine sehr gleichmäßige Erwärmung der Batteriezelle bzw. der Batteriezellen möglich. Das angeformte Kunststoffmaterial kann zur weiteren Verbesserung bzw. Optimierung der Wärmeübertragung vorzugsweise eine Wärmeleitfähigkeit bzw. eine spezifische Wärmeleitfähigkeit aufweisen, die größer ist als die Wärmeleitfähigkeit bzw. die spezifische Wärmeleitfähigkeit des Materials des Rahmens.

Die Erfindung betrifft auch die Verwendung eines erfindungsgemäßen Rahmens zum Halten und Temperieren einer Batteriezelle.

### Kurzbeschreibung der Zeichnungen

Nachfolgend werden Ausführungsbeispiele der Erfindung anhand der beigefügten Zeichnungen näher erläutert. Es zeigt:
- Fig. 1A: eine schematische dreidimensionale Darstellung eines Ausführungsbeispiels einer erfindungsgemäßen Anordnung umfassend einen Rahmen und eine Batteriezelle in Form einer Coffeebag-Zelle,
- Fig. 1 B: die dreidimensionale Darstellung der Fig. 1 A zur Veranschaulichung von weiteren Schnittebenen,
- Fig. 2: eine schematische Schnittdarstellung der Anordnung aus Fig. 1,
- Fig. 3: eine schematische Schnittdarstellung eines zweiten Ausführungsbeispiels einer erfindungsgemäßen Anordnung dessen Rahmen mit einem plattenförmigen Element versehen ist,
- Fig. 4: eine schematische Schnittdarstellung eines dritten Ausführungsbeispiels einer erfindungsgemäßen Anordnung umfassend ein System von zwei miteinander verbundenen Rahmen und eine Coffeebag-Zelle,
- Fig. 5: eine schematische Schnittdarstellung eines vierten Ausführungsbeispiels einer erfindungsgemäßen Anordnung umfassend ein System von zwei miteinander verbundenen Rahmen mit jeweils einem plattenförmigen Element und einer Coffeebag-Zelle,
- Fig. 6: eine schematische Schnittdarstellung eines fünften Ausführungsbeispiels einer erfindungsgemäßen Anordnung umfassend ein System von zwei miteinander verbundenen Rahmen und eine Coffeebag-Zelle,
- Fig. 7: eine schematische Draufsicht auf ein Ausführungsbeispiel eines plattenförmigen Elements,
- Fig. 8: eine weitere schematische Schnittdarstellung der Anordnung aus den Fig. 1 A und 1 B,
- Fig. 9: eine schematische Schnittdarstellung eines Ausführungsbeispiels eines erfindungsgemäßen Systems umfassend zwei miteinander verbundene Rahmen,
- Fig. 10.1 bis 10.5: jeweils schematische Schnittdarstellungen von Verbindungsstücken, einem Verschlussstück und einem Anschlussstück.

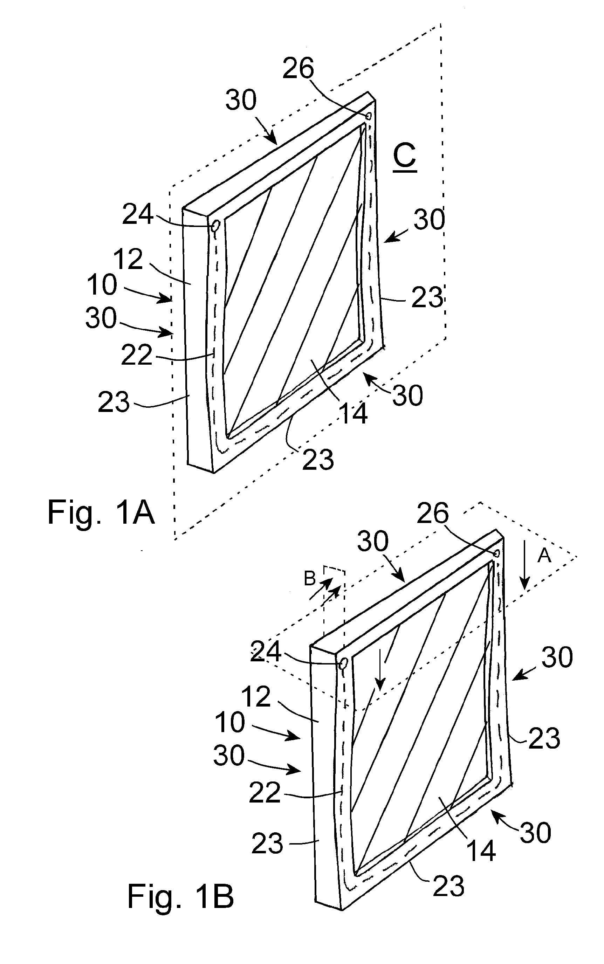

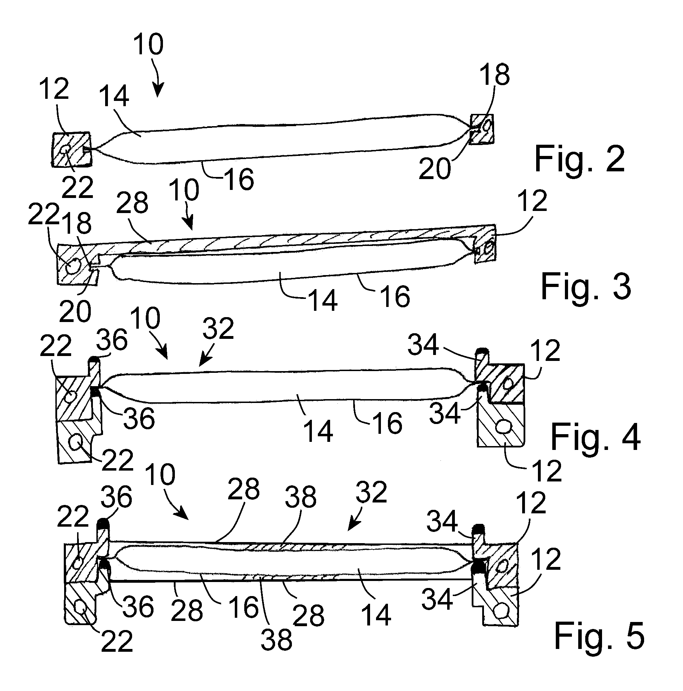

Die Fig. 1 A und B zeigen schematische dreidimensionale Darstellungen eines Ausführungsbeispiels einer erfindungsgemäßen Anordnung 10 umfassend einen Rahmen 12 und eine Batteriezelle 14 in Form einer Coffeebag-Zelle. Die Fig. 2 zeigt eine schematische Darstellung des Schnitts A (vgl. Fig. 1 B)

Die dargestellte Coffeebag-Zelle 14 ist flach und rechteckig ausgebildet. Der nicht näher dargestellte elektrochemische Bereich ist von einer folienartigen Verpackung 16 umgeben. Der Umfang 18 der Coffeebag-Zelle 14 bzw. der Umfang 18 der folienartigen Verpackung 16 ist von dem erfindungsgemäßem Rahmen 12 zum Halten und Temperieren der Coffeebag-Zelle 14 eingefasst, wobei der Umfang 18 bei dem hier dargestellten Ausführungsbeispiel in einer an dem Rahmen 12 ausgebildeten Nut 20 aufgenommen ist. Die vorgesehene Einfassung ermöglicht einen stabilen Halt der Coffeebag-Zelle 14 an dem Rahmen 12. Um den Umfang 18 der Coffeebag-Zelle 14 in der Nut 20 aufzunehmen wird die Coffeebag-Zelle 14 vorzugsweise um eine rechtwinkelig zur Zeichenebene der Fig. 2 orientierte Achse gebogen und der Umfang 18 der Coffeebag-Zelle im gebogenen Zustand in der Nut 20 angeordnet. Im entspannten bzw. unverbogenen Zustand ist die Coffeebag-Zelle 14 dann in der Nut 20 klemmend gehalten.

Der Rahmen 12 weist einen Fluidkanal 22 für die Durchströmung mit einem Temperierungsfluid zum Temperieren der Coffeebag-Zelle 14 auf. Der Rahmen 12 weist zwei Einlässe 24 zum Einströmen des Temperierungsfluids in den Fluidkanal 22 und zwei Auslässe 26 zum Ausströmen des Temperierungsfluids aus dem Fluidkanal 22 auf (in der Fig. 1 ist nur jeweils ein Einlass und ein Auslass erkennbar). Der Fluidkanal 22 ist in Form eines zusammenhängenden Hohlraums innerhalb des Rahmens 12 angeordnet bzw. ausgebildet und parallel zur Rahmenebene C ausgerichtet, wie in Fig. 1 A veranschaulicht, wobei in den Fig. 1A und 1 B der Fluidkanal 22 bzw. der Verlauf des Fluidkanals 22 durch eine gestrichelte Linie veranschaulicht ist. In dem in den Fig. 1A und 1B dargestellten Ausführungsbeispiel erstreckt sich der Fluidkanal 22 über drei winkelig miteinander verbundene Rahmenabschnitte 23 des Rahmens 12, wobei hier jeweils zwei Rahmenabschnitte 23 im Wesentlichen unter einem rechten Winkel miteinander verbunden sind.

Die Einlässe könne einen beliebigen Abstand zueinander aufweisen, insbesondere einen Abstand, der von dem in Fig. 1 veranschaulichten abweicht. So kann der Abstand zwischen einem Einlass und einem Auslass z.B. nur wenige cm betragen, wie z.B. bis 2 cm.

Die Fig. 3 zeigt eine Schnittdarstellung (Schnittebene korrespondierend zur Schnitt A - vgl. Fig. 1 B) eines zweiten Ausführungsbeispiels einer erfindungsgemäßen Anordnung 10 deren Rahmen 12 mit einem plattenförmigen Element 28 versehen ist, das sich zwischen zwei Paaren gegenüberliegender Seiten 30 (vgl. auch Fig. 1) des Rahmens 12 erstreckt. Das plattenförmige Element 28 ist an dem Rahmen 12 angeformt bzw. einstückig mit dem Rahmen 12 ausgebildet.

Die Fig. 4 zeigt eine Schnittdarstellung (Schnittebene korrespondierend zur Schnitt A - vgl. Fig. 1 B) eines dritten Ausführungsbeispiels einer erfindungsgemäßen Anordnung 10 umfassend ein System 32 von zwei miteinander verbundenen Rahmen 12 und einer Coffeebag-Zelle 14. Jeder Rahmen 12 weist eine Klemmschiene 34 auf, wobei auf die Klemmschiene 34 des unteren Rahmens 12 der obere Rahmen 12 aufgesetzt ist, und wobei der untere Rahmen 12 und der obere Rahmen 12 entlang der Klemmschiene 34 gegeneinander verschiebbar sind. Die Coffeebag-Zelle 14 ist zwischen der Klemmschiene 34 des unteren Rahmens 12 und dem oberen Rahmen 12 klemmend gehalten. An der Klemmschiene 34 des oberen Rahmens 12 und an der Klemmschiene 34 des unteren Rahmens 12 ist ein Kunststoffmaterial 36 angeformt, wobei das an der Klemmschiene 34 des unteren Rahmens 12 angeformte Kunststoffmaterial 36 einen flächigen Kontakt zu der Coffeebag-Zelle 14 aufweist. Das angeformte Kunststoffmaterial 36 ist weicher ausgebildet als das Material jedes Rahmens 12.

Das in Fig. 5 dargestellte vierte Ausführungsbeispiel unterscheidet sich von dem in Fig. 4 dargestellten Ausführungsbeispiel dadurch, dass der obere und der untere Rahmen 12 jeweils mit einem plattenförmigen Element 28 in Form eines Metallblechs versehen sind, das sich zwischen den beiden Paaren gegenüberliegender Seiten 30 des Rahmens 12 erstreckt. Zwischen dem Metallblech 28 des oberen Rahmens 12 und der Coffeebag-Zelle 14 und zwischen dem Metallblech 28 des unteren Rahmens 12 und der Coffeebag-Zelle 14 ist jeweils ein ergänzendes Wärmeleitmedium 38 in Form einer Wärmeleitpaste vorgesehen. Beide Rahmen 12 können insbesondere durch einen Spritzgussprozess hergestellt werden, wobei das Metallblech 28 während des Spritzgießens mit angeformt werden kann bzw. vor dem Spritzgießen in das Spritzgusswerkzeug eingebracht werden kann.

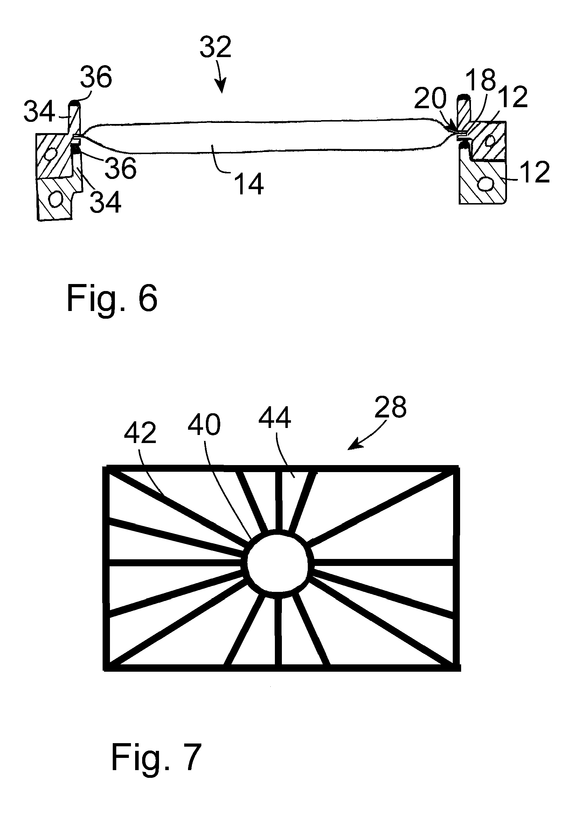

Das in Fig. 6 dargestellte fünfte Ausführungsbeispiel unterscheidet sich von dem in Fig. 4 dargestellten Ausführungsbeispiel insbesondere dadurch, dass das an der Klemmschiene 34 des unteren Rahmens 12 angeformte Kunststoffmaterial 36 zwischen der Klemmschiene 34 des unteren Rahmens 12 und dem oberen Rahmen 12 angeordnet ist und einen flächigen Kontakt zu dem oberen Rahmen 12 aufweist, und dass die Coffeebag-Zelle 14 nicht zwischen der Klemmschiene 34 des unteren Rahmens 12 und dem oberen Rahmen 12 klemmend gehalten ist. Der Umfang 18 der Coffeebag-Zelle 14 ist bei dem hier dargestellten Ausführungsbeispiel in einer an dem oberen Rahmen 12 ausgebildeten Nut 20 aufgenommen.

Die Fig. 7 zeigt eine schematische Draufsicht auf ein Ausführungsbeispiel eines plattenförmigen Elements 28. Das plattenförmige Element 28 weist ein ringförmiges Element 40 und eine Vielzahl von länglichen Elementen 42 auf, die sich in radialer Richtung von dem ringförmigen Element 40 wegerstrecken, wobei der Bereich zwischen jeweils zwei benachbarten länglichen Elementen 42 eine das plattenförmige Element 28 durchsetzende Aussparung 44 aufweist.

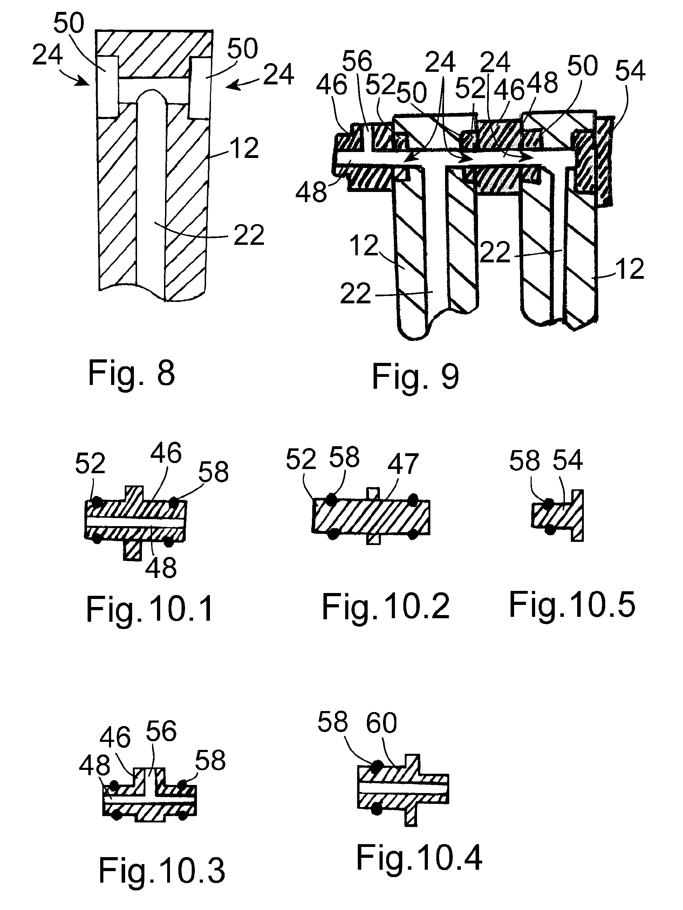

Die Fig. 8 zeigt eine schematische Darstellung des Schnitts B (vgl. Fig. 1 B). Aus dieser Schnittdarstellung geht hervor, dass der Rahmen 12 zwei Einlässe 24 zum Einströmen des Temperierungsfluids in den Fluidkanal 22 aufweist. Der Rahmen weist ferner zwei identisch zu den Einlässen 24 ausgebildete Auslässe 26 auf, wovon einer in Fig. 1 B erkennbar ist.

Die Fig. 9 zeigt eine schematische Schnittdarstellung eines Ausführungsbeispiels eines erfindungsgemäßen Systems 32 umfassend zwei benachbarte miteinander verbundene Rahmen 12. Der Schnitt der Fig. 9 ist hierbei parallel zum Schnitt B orientiert (vgl. Fig. 1 B). Die beiden Rahmen12 sind durch ein fluidleitendes Element 46 in Form eines Verbindungsstücks 46 lösbar miteinander verbunden, wobei ferner der rechte Einlass 24 des linken Rahmens 12 mit dem linken Einlass 24 des rechten Rahmens 12 durch das Verbindungsstück 46 über einen in dem Verbindungsstück 46 ausgebildetem Verbindungskanal 48 fluidleitend miteinander verbunden ist.

Die Einlässe 24 weisen an dem Rahmen 12 ausgebildete Aufnahmen 50 z.B. zur Aufnahme eines Endbereichs 52 eines Verbindungsstücks 46 oder eines Verschlussstücks 54 auf, wobei das Verbindungsstück 46 und/oder das Verschlussstück 54 vorzugsweise wenigstens teilweise oder zur Gänze aus einem Kunststoffmaterial bestehen.

Das Verbindungsstück 46 zum lösbaren Verbinden der Rahmen 12 kann zusätzlich zu dem Verbindungskanal 48 auch einen Zuführkanal oder Abführkanal 56 aufweisen, der sich bis zu dem Verbindungskanal 48 erstreckt. Ein derartiges Verbindungsstück 46 nach Art eines T-Stücks veranschaulicht Fig. 10.3 und ist auch in Fig. 9 links gezeigt, wo ein Endbereich 52 dieses Verbindungsstücks 46 in der Aufnahme 50 des linken Einlasses 24 des linken Rahmens 12 aufgenommen ist. Die Endbereiche 52 sind vorzugsweise manuell in der Aufnahme 50 aufnehmbar bzw. manuell in die Aufnahme 50 einbringbar oder einschiebbar, so dass auf praktische und einfache Weise eine manuelle Montage bzw. Demontage des Systems 32 möglich ist.

Die Einlässe 24 und Auslässe 26 können, wie auch der Fluidkanal 22, durch Anwenden einer Gasinjektionstechnik oder einer Wasserinjektionstechnik oder durch ein anderes hohlkammerformendes Verfahren ausgebildet werden.

Wie die Fig. 9 veranschaulicht, kann ein über das in der Fig.9 linke Verbindungsstück 46 in den linken Einlass 24 des linken Rahmens 12 einströmendes Temperierungsfluid über das Verbindungsstück 46 zwischen den beiden Rahmen 12 auch in den linken Einlass 24 des rechten Rahmens 12 einströmen, so das durch Vorsehen des den rechten Einlass 24 des rechten Rahmens 12 verschließenden Verschlussstücks 54 beide Fluidkanäle 22 der beiden Rahmen 12 von einer gemeinsamem Temperierungsfluid-Quelle, wie z.B. einer Temperierungsfluid-Leitung mit Temperierungsfluid durchströmt werden können. Ein zu Fig. 9 analoger Aufbau ist auch für die Auslässe 26 vorgesehen, so dass das Temperierungsfluid nach dem Durchströmen der Fluidkanäle 22 einer gemeinsamen Abführleitung zuführbar ist.

Die Fig. 10.1 veranschaulicht eine Ausführungsform eines Verbindungsstücks 46, das zwei mit jeweils einer Dichtung in Form eines O-Rings 58 versehene Endbereiche 52 aufweist, um jeden Endbereich 52 fluiddicht in der Aufnahme 50 eines Einlasses 24 bzw. in der Aufnahme eines Auslasses 26 aufnehmen zu können.

Das in Fig. 10.2 veranschaulichte Verbindungsstück 47 weist auch mit jeweils einem O-Ring 58 versehene Endbereiche 52 auf. Es hat keine fluidleitende Funktion und ist lediglich für die Verbindung zweier beabstandeter Rahmen vorgesehen. Auch das in Fig. 10.5 veranschaulichte Verschlussstück 54 weist einen mit einem O-Ring 58 versehenen Endbereich auf.

Bei dem in Fig. 10. 4 dargestellten Element handelt es sich im einen Adapter 60 bzw. ein Anschlussstück 60 über welches eine fluidleitende Verbindung eines Einlasses 24 bzw. Auslasses 26 eines Rahmens 12 mit einer Temperierungsfluid-Quelle oder einer Abführleitung herstellbar ist. Auch das Anschlussstück 60 bzw. der Adapter 60 weist einen mit einem O-Ring 58 versehenen Endbereich auf.

### Bezugszeichenliste

- 10: Anordnung
- 12: Rahmen
- 14: Batteriezelle
- 16: folienartige Verpackung
- 18: Umfang
- 20: Nut
- 22: Fluidkanal
- 23: Rahmenabschnitt
- 24: Einlass
- 26: Auslass
- 28: plattenförmiges Element
- 30: Rahmenseite
- 32: System
- 34: Klemmschiene
- 36: angeformtes Kunststoffmaterial
- 38: Wärmeleitmedium
- 40: ringförmiges Element
- 42: längliches Element
- 44: Aussparung
- 46: fluidleitendes Element
- 47: Verbindungsstück
- 48: Verbindungskanal
- 50: Aufnahme
- 52: Endbereich
- 54: Verschlussstück
- 54: Zuführkanal, Abführkanal
- 58: O-Ring
- 60: Anschlussstück

## Patentansprüche

1. Rahmen (12) zum Halten und Temperieren einer Batteriezelle (14), wobei der Rahmen (12) eingerichtet ist, den Umfang (18) einer Batteriezelle (14) wenigstens teilweise einzufassen, wobei der Rahmen (12) wenigstens einen Fluidkanal (22) für die Durchströmung mit einem Temperierungsfluid zum Temperieren der Batteriezelle (14) aufweist, wobei der Fluidkanal (22) wenigstens abschnittsweise innerhalb des Rahmens (12) angeordnet und parallel zur Rahmenebene (C) ausgerichtet ist.

2. Rahmen (12) nach Anspruch 1, **dadurch gekennzeichnet, dass** der Fluidkanal (22) sich über mehrere winkelig miteinander verbundene Rahmenabschnitte (23) erstreckt.

3. Rahmen (12) nach Anspruch 1 oder 2, **dadurch gekennzeichnet, dass** der Rahmen (12) mit wenigstens einem plattenförmigen Element (28) versehen ist, das sich zwischen wenigstens zwei gegenüberliegenden Seiten (30) des Rahmens (12) erstreckt.

4. Rahmen (12) nach Anspruch 3, **dadurch gekennzeichnet, dass** das plattenförmige Element (28) an dem Rahmen (12) angeformt ist.

5. Rahmen (12) nach Anspruch 3 oder 4, **dadurch gekennzeichnet, dass** das plattenförmige Element (28) das plattenförmige Element (28) durchsetzende Aussparungen (44) aufweist.

6. Rahmen (12) nach einem der vorangehenden Ansprüche, **dadurch gekennzeichnet, dass** der Rahmen (12) einstückig ausgebildet ist.

7. Rahmen (12) nach einem der vorangehenden Ansprüche, **dadurch gekennzeichnet, dass** der Rahmen (12) wenigstens teilweise aus Metall und/oder wenigstens teilweise aus Kunststoffmaterial besteht.

8. Rahmen (12) nach einem der vorangehenden Ansprüche, **dadurch gekennzeichnet, dass** der Rahmen (12) Kohlenstoffpartikel und/oder Metallpartikel aufweist.

9. System (32) umfassend wenigstens zwei miteinander verbundene Rahmen (12) nach einem der Ansprüche 1 bis 8.

10. System (32) nach Anspruch 9, **dadurch gekennzeichnet, dass** die Rahmen (12) derart miteinander verbunden sind, dass die Rahmen (12) reihenförmig und parallel zueinander angeordnet sind.

11. System (32) nach Anspruch 9 oder 10, **dadurch gekennzeichnet, dass** wenigstens ein Rahmen (12) eine Klemmschiene (34) aufweist, wobei auf die Klemmschiene (34) ein benachbarter Rahmen (12) aufgesetzt ist und der Rahmen (12) mit der Klemmschiene (34) und der benachbarte Rahmen (12) entlang der Klemmschiene (34) gegeneinander verschiebbar sind.

12. System (32) nach Anspruch 11, **dadurch gekennzeichnet, dass** an der Klemmschiene (34) oder dem benachbarten Rahmen (12) ein Kunststoffmaterial (36) angeformt ist, das zwischen der Klemmschiene (34) und dem benachbarten Rahmen (12) angeordnet ist und einen flächigen Kontakt zu dem benachbarten Rahmen (12) oder der Klemmschiene (34) aufweist, wobei das angeformte Kunststoffmaterial (36) weicher ausgebildet ist als das Material jedes Rahmens (12) .

13. System (32) nach einem der Ansprüche 9 bis 12, **dadurch gekennzeichnet, dass** jeder Rahmen (12) wenigstens einen Einlass (24) zum Einströmen des Temperierungsfluids in den Fluidkanal (22) und wenigstens einen Auslass (26) zum Ausströmen des Temperierungsfluids aus dem Fluidkanal (22) aufweist, wobei die Einlässe (24) und/oder die Auslässe (26) von jeweils zwei Rahmen (12) durch ein fluidleitendes Element (46) fluidleitend miteinander verbunden sind.

14. System (32) nach Anspruch 13, **dadurch gekennzeichnet, dass** das fluidleitende Element (46) in Form eines Verbindungsstücks ausgebildet ist, das zwei benachbarte Rahmen (12) lösbar miteinander verbindet.

15. Anordnung (10) mit wenigstens einer Batteriezelle (14) und wenigstens einem Rahmen (12) nach einem der Ansprüche 1 bis 8 oder wenigstens einem System (32) nach einem der Ansprüche 9 bis 14, wobei der Umfang (18) der Batteriezelle (14) in dem Rahmen (12) wenigstens teilweise eingefasst ist.

16. Anordnung (10) nach Anspruch 15, **dadurch gekennzeichnet, dass** wenigstens ein Rahmen (12) nach einem der Ansprüche 3 bis 5 vorgesehen ist, wobei zwischen dem plattenförmigen Element (28) des Rahmens (12) und der Batteriezelle (14) ein ergänzendes Wärmeleitmedium (38), insbesondere eine Wärmeleitpaste vorgesehen ist.

17. Anordnung (10) nach Anspruch 15, **dadurch gekennzeichnet, dass** wenigstens ein System (32) nach Anspruch 11 vorgesehen ist, wobei die Batteriezelle (14) zwischen der Klemmschiene (34) und dem benachbarten Rahmen (12) klemmend gehalten ist.

18. Anordnung (10) nach Anspruch 17, **dadurch gekennzeichnet, dass** an der Klemmschiene (32) oder dem benachbarten Rahmen (12) ein Kunststoffmaterial (36) angeformt ist, das einen flächigen Kontakt zu der Batteriezelle (14) aufweist, wobei das angeformte Kunststoffmaterial (36) weicher ausgebildet ist als das Material jedes Rahmens (12).
